# EUROPEAN PATENT APPLICATION

(11) **EP 2 960 216 A1**
(43) Date of publication of application: **30.12.2015**
(21) Application number: 14754843.2
(22) Date of filing: 20.02.2014
(51) Int. Cl.: C03B 33/02, B32B 17/10, B32B 37/00

(54) **METHOD FOR PRODUCING FLEXIBLE FILM**

(30) Priority: 20.02.2013 JP 2013031279
(71) Applicant: Nitto Denko Corporation, Ibaraki-shi, Osaka 567-8680 (JP)
(72) Inventor: MURASHIGE, Takeshi, Ibaraki-shi Osaka 567-8680 (JP); HATTORI, Daisuke, Ibaraki-shi Osaka 567-8680 (JP); KAMEYAMA, Tadayuki, Ibaraki-shi Osaka 567-8680 (JP)
(74) Representative: Hoffmann Eitle
(86) International application number: PCT/JP2014/053979
(87) International publication number: WO 2014/129525

(57) **Abstract**

There is provided a method of producing a flexible film (fragmented laminate) which has a smooth cut surface and is suppressed in breakage of a thin glass, the method including cutting a laminate having the thin glass and a resin layer. The method of producing a flexible film of the present invention includes cutting a laminate including a thin glass having a thickness of 100 µm or less and a resin layer arranged on one side, or each of both sides, of the thin glass. The method of producing a flexible film includes the steps of forming a groove from an outer surface side of the resin layer and cutting the laminate along the groove.

## Description

### Technical Field

The present invention relates to a method of producing a flexible film. More specifically, the present invention relates to a method of producing a flexible film including a thin glass.

### Background Art

In recent years, reductions in weight and thickness of a flat panel display (FPD: a liquid crystal display element or an organic EL display element, for example) have been advanced through developments of visual communication technologies. A glass substrate has hitherto been used as a substrate for use in the display element. The glass substrate is excellent in transparency, solvent resistance, gas barrier property, and heat resistance. However, when one attempts to reduce the thickness of a glass material for forming the glass substrate, the glass substrate is reduced in weight and simultaneously is improved in flexibility, but there arises a problem in that the glass substrate becomes difficult to handle because of its insufficient impact resistance. In order to improve the handleability of a thin glass substrate, a glass substrate obtained by forming a resin layer on a glass surface has been disclosed (see, for example, Patent Literatures 1 and 2).

A glass substrate is typically used after having been divided into a predetermined size depending on applications. A method of dividing the glass substrate is, for example, a method involving using a cutting tool or a method involving using laser light. However, when the glass substrate is divided with the cutting tool, a problem in that the smoothness of a divided surface is poor arises. In addition, when the laser light is used for a glass substrate having a resin layer, appropriate processing temperatures of a resin and a glass differ from each other, and hence it becomes difficult to set an irradiation condition appropriate for both the resin and the glass. Specifically, when such an irradiation condition that the glass can be divided is adopted, the resin layer burns to reduce the smoothness of a divided surface. When such an irradiation condition that the resin layer does not burn is adopted, there arises a problem in that the glass cannot be appropriately divided and hence a crack occurs.

### Citation List

### Patent Literature

[PTL 1] JP 11-329715 A
[PTL 2] JP 2001-113631 A

### Summary of Invention

### Technical Problem

The present invention has been made to solve the conventional problems, and an object of the present invention is to provide a method of producing a flexible film (fragmented laminate) which has a smooth cut surface and is suppressed in breakage of a thin glass, the method including cutting a laminate having the thin glass and a resin layer.

### Solution to Problem

A method of producing a flexible film of the present invention includes cutting a laminate including a thin glass having a thickness of 100 µm or less and a resin layer arranged on one side, or each of both sides, of the thin glass. The method of producing a flexible film includes the steps of forming a groove from an outer surface side of the resin layer and cutting the laminate along the groove.

In one embodiment of the present invention, the step of forming a groove is performed for the laminate except the thin glass.

In one embodiment of the present invention, a width of the groove on an outer surface of the resin layer is from 0.01 mm to 5 mm.

In one embodiment of the present invention, the step of forming a groove comprises cutting a groove by using a cutting tool or laser light.

In one embodiment of the present invention, in the laminate, a ratio of a total thickness of the resin layer to the thickness of the thin glass is from 0.3 to 4.

### Advantageous Effects of Invention

According to the embodiment of the present invention, the flexible film (fragmented laminate) which has a smooth cut surface and is suppressed in breakage (e.g., crack) of a thin glass can be produced by the step of forming a groove from the outer surface side of the resin layer of a laminate and the step of cutting the laminate along the groove.

### Brief Description of Drawings

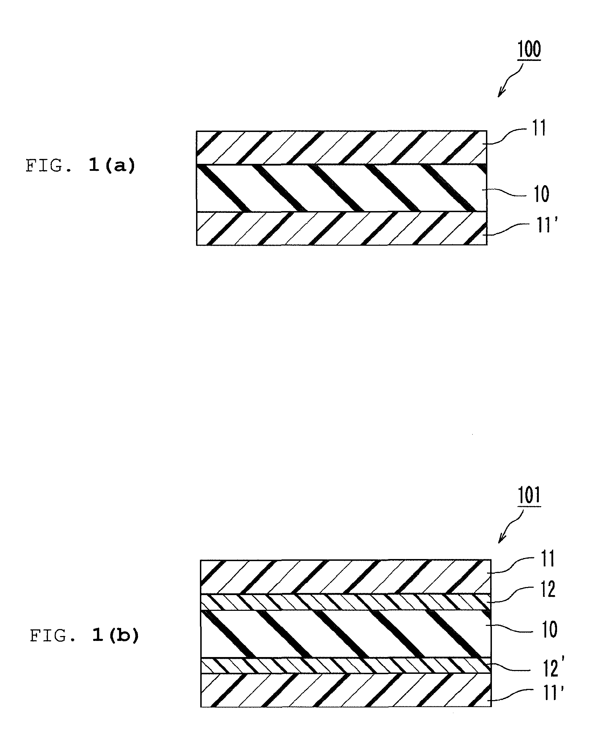

FIG. **1(a)** is a schematic sectional view of a laminate to be used in a preferred embodiment of the present invention and FIG. **1(b)** is a schematic sectional view of the laminate to be used in another embodiment of the present invention.

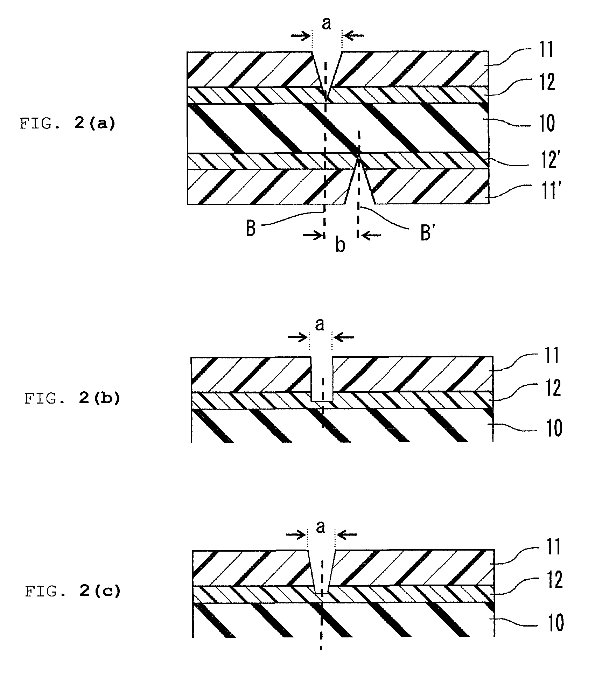

FIG. **2(a)** is a schematic sectional view for illustrating a groove formed in a resin layer in one embodiment of the present invention, FIG. **2 (b)** is a schematic sectional view for illustrating the groove formed in the resin layer in another embodiment of the present invention, and FIG. **2(c)** is a schematic sectional view for illustrating the groove formed in the resin layer in still another
embodiment of the present invention.

### Description of Embodiments

### A. Laminate

A method of producing a flexible film of the present invention includes cutting a laminate. FIG. **1(a)** is a schematic sectional view of the laminate to be used in a preferred embodiment of the present invention. The laminate **100** includes a thin glass **10** and a resin layer **11, 11'** arranged on one side, or each of both sides, of the thin glass **10** (both sides in the illustrated example). FIG. **1(b)** is a schematic sectional view of the laminate to be used in another preferred embodiment of the present invention. In the laminate **101**, the thin glass **10** and the resin layer **11, 11'** are laminated through intermediation of an adhesion layer **12, 12'.**

The total thickness of the laminate is preferably 160 µm or less, more preferably 120 µm or less, particularly preferably from 50 µm to 120 µm.

The ratio (d2/d1) of the total thickness (d2) of the resin layer to the thickness (d1) of the thin glass is preferably from 0.3 to 4, more preferably from 0.5 to 2.1. When the ratio falls within such range, a stress occurring in the thin glass is appropriately adjusted and hence the thin glass can be sufficiently reinforced. In addition, the peeling of the resin layer from the thin glass is prevented and hence the laminate can be stably cut along a groove (described later) formed in the resin layer. It should be noted that when the laminate includes resin layers on both sides of the thin glass, the term "total thickness of the resin layer" as used herein means the sum of the thicknesses of the respective resin layers.

### A-1. Thin Glass

As the thin glass, any appropriate glass can be adopted as long as the glass is in a sheet shape. Examples of the thin glass include soda-lime glass, borate glass, aluminosilicate glass, and quartz glass according to the classification based on a composition. In addition, according to the classification based on an alkali component, there are given alkali-free glass and low alkali glass. The content of an alkali metal component (e.g., Na₂O, K₂O, Li₂O) of the thin glass is preferably 15 wt% or less, more preferably 10 wt% or less.

The thickness of the thin glass is preferably 100 µm or less, more preferably from 10 µm to 100 µm.

The density of the thin glass is preferably from 2.3 g/cm³ to 3.0 g/cm³, more preferably from 2.3 g/cm³ to 2.7 g/cm³.

Any appropriate molding method can be adopted as a forming method for the thin glass. The thin glass is typically produced by melting a mixture including a main raw material such as silica or alumina, an antifoaming agent such as a salt cake or antimony oxide, and a reducing agent such as carbon at a temperature of from 1,400°C to 1,600°C and forming the resultant into a thin sheet shape, followed by cooling. A forming method for a thin sheet of the thin glass is exemplified by a slot down-draw method, a fusion method, and a float method. A thin glass formed into a sheet shape by each of those methods may be chemically polished with a solvent such as hydrofluoric acid, as necessary, in order to provide a thinner sheet and enhance the smoothness of the surface and the end portion.

The surface of the thin glass may be subjected to an easy-adhesion treatment. Subjecting the surface to the easy-adhesion treatment can improve an adhesive strength between the thin glass and the resin layer. Examples of the easy-adhesion treatment include a non-contact-type surface treatment such as a corona treatment or a plasma treatment, a coupling treatment, and a combination thereof.

Examples of the coupling agent to be used in the coupling treatment include an amino-based coupling agent, an epoxy-based coupling agent, an isocyanate-based coupling agent, a vinyl-based coupling agent, a mercapto-based coupling agent, and a (meth) acryloxy-based coupling agent. When a resin constituting the resin layer has an ester bond, an amino-based coupling agent, an epoxy-based coupling agent, or an isocyanate-based coupling agent is preferably used. When a resin constituting the resin layer has a hydroxy group, an epoxy-based coupling agent is preferably used. The amino-based coupling agent is preferably an alkoxysilane having an amino group or a halogenated silane having an amino group, particularly preferably an alkoxysilane having an amino group.

### A-2. Resin Layer

A thermoplastic resin is preferably used as a resin constituting the resin layer. Examples of the resin include: a polyethersulfone-based resin; a polycarbonate-based resin; an acrylic resin; polyester-based resins such as a polyethylene terephthalate-based resin and a polyethylene naphthalate-based resin; a polyolefin-based resin; cycloolefin-based resins such as a norbornene-based resin;a polyimide-based resin; a polyamide-based resin; a polyimide amide-based resin; a polyarylate-based resin; a polysulfone-based resin; and a polyether imide-based resin. Alternatively, cross-linking resins such as an epoxy-based resin, a urethane-based resin, and a silicone-based resin may be used.

In one embodiment, the resin layer contains a resin having a repeating unit represented by the general formula (1). The incorporation of such resin enables the formation of a resin layer which is excellent in adhesiveness with the thin glass and is also excellent in toughness. Such resin layer hardly peels from the thin glass upon cutting of the laminate and can prevent a crack occurring in the thin glass.

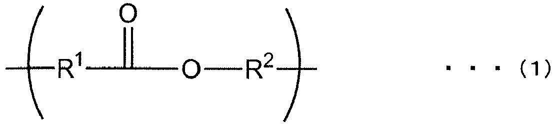

In the formula (1), R¹ represents a substituted or unsubstituted aryl group having 6 to 24 carbon atoms, a linear or branched alkylene group having 1 to 8 carbon atoms, a cycloalkylene group having 4 to 14 carbon atoms, or an oxygen atom, preferably represents a substituted or unsubstituted aryl group having 6 to 20 carbon atoms, a linear or branched alkylene group having 1 to 6 carbon atoms, a cycloalkylene group having 4 to 12 carbon atoms, or an oxygen atom, and more preferably represents a substituted or unsubstituted aryl group having 6 to 18 carbon atoms, a linear or branched alkylene group having 1 to 4 carbon atoms, a cycloalkylene group having 5 to 10 carbon atoms, or an oxygen atom. R² represents a substituted or unsubstituted aryl group having 6 to 24 carbon atoms, a linear or branched alkyl group having 1 to 8 carbon atoms, a linear or branched alkylene group having 1 to 8 carbon atoms, a cycloalkyl group having 5 to 12 carbon atoms, a cycloalkylene group having 5 to 12 carbon atoms, or a hydrogen atom, and preferably represents a substituted or unsubstituted aryl group having 6 to 20 carbon atoms, a linear or branched alkyl group having 1 to 6 carbon atoms, a linear or branched alkylene group having 1 to 4 carbon atoms, a cycloalkyl group having 5 to 10 carbon atoms, a cycloalkylene group having 5 to 10 carbon atoms, or a hydrogen atom.

The polymerization degree of the resin having a repeating unit represented by the general formula (1) is preferably from 10 to 6,000, more preferably from 20 to 5,000, particularly preferably from 50 to 4,000.

The glass transition temperature of the resin having a repeating unit represented by the general formula (1) is preferably 120 °C or more, more preferably 150 °C or more, particularly preferably from 180°C to 350°C.

The thickness of the resin layer is preferably from 1 µm to 60 µm, more preferably from 10 µm to 50 µm, still more preferably from 20 µm to 40 µm. When the resin layers are arranged on both sides of the thin glass, the thicknesses of the respective resin layers may be identical to or different from each other. The thicknesses of the respective resin layers are preferably identical to each other. Further, the respective resin layers may be constituted of the same resin, or may be constituted of different resins. The respective resin layers are preferably constituted of the same resin. Therefore, it is most preferred that the respective resin layers be constituted of the same resin so as to have the same thickness. With such construction, even when the laminate is subjected to a heat treatment, a thermal stress is uniformly applied to both surfaces of the thin glass, and hence it becomes extremely difficult for the warping or waviness of the laminate to occur.

The resin layer can further contain any appropriate additive depending on purposes. Examples of the additive include a diluent, an antioxidant, a modifier, a surfactant, a dye, a pigment, a discoloration preventing agent, a UV absorber, a softening agent, a stabilizer, a plasticizer, an antifoaming agent, and a stiffener. The kind, number, and amount of an additive to be contained in the resin layer can be set appropriately depending on purposes.

### B. Method of producing Laminate

Any appropriate production method can be adopted as a method of producing the laminate as long as the laminate of the above-mentioned construction can be produced. A method of forming the resin layer on the thin glass is, for example, a method involving applying a solution containing the resin to the thin glass to form the resin layer, or a method involving laminating the resin layer containing the resin and the thin glass through intermediation of an adhesion layer.

In the method involving applying the solution containing the resin to form the resin layer, the resin layer is typically formed by: applying the solution containing the resin (hereinafter sometimes referred to as "resin solution") to one side, or each of both sides, of the thin glass to form an applied layer; and drying the applied layer.

Examples of the solvent to be used in the formation of the applied layer include ketone-based solvents, halogen-based solvents, aromatic solvents, dimethyl sulfoxide, N,N'-dimethyl formamide, and N-methyl pyrrolidone.

As a method of applying the resin solution, there are given: coating methods, e.g., air doctor coating, blade coating, knife coating, reverse coating, transfer roll coating, gravure roll coating, kiss coating, cast coating, spray coating, slot orifice coating, calender coating, electrocoating, dip coating, and die coating; and printing methods, e.g., relief printing methods such as flexographic printing, intaglio printing methods such as a direct gravure printing method and an offset gravure printing method, litho printing methods such as an offset printing method, and stencil printing methods such as a screen printing method.

Any appropriate drying method (such as air drying, blast drying, or heat drying) can be adopted as a method for the drying. In the case of, for example, the heat drying, a drying temperature is typically from 90°C to 200°C, and a drying time is typically from 1 minute to 10 minutes.

After the applied layer has been dried, a heat treatment may be performed. Any appropriate heat treatment method can be adopted as a method for the heat treatment. Typically, a heat treatment temperature is from 90°C to 300°C, and a heat treatment time is from 5 minutes to 45 minutes.

Any appropriate method can be adopted as the method of laminating the resin layer and the thin glass through intermediation of the adhesion layer. The following method is given as a specific example thereof: an adhesive is applied to one side, or each of both sides, of the thin glass, and the thin glass and a resin film are bonded to each other, followed by the curing of the adhesive. In addition, the laminate may be obtained by: bonding an applied layer formed of the resin solution formed on a supporting base material (i.e., an applied layer in a semidry state) and the thin glass through intermediation of the adhesive; performing a heat treatment (the drying and curing of the applied layer, and the curing of the adhesive) after the bonding; and peeling the supporting base material.

Examples of the adhesive include adhesives including each resin having a cyclic ether group such as an epoxy group, a glycidyl group, or an oxetanyl group, an acrylic resin, or a silicone-based resin.

A method of curing the adhesive is, for example, heat curing or active energy ray curing. The adhesive is preferably cured by the active energy ray curing. When the adhesive is cured by the active energy ray curing, the expansion of the resin layer can be suppressed and hence a laminate having a smooth surface can be obtained.

The adhesive can further include any appropriate other component. Examples of the other component include a curing agent such as a UV curing agent, a photosensitizer, and a coupling agent.

The adhesion layer is formed by curing the adhesive as described above. The thickness of the adhesion layer is preferably from 0.1 µm to 20 µm, more preferably from 0.1 µm to 10 µm.

### C. Method of producing Flexible Film

The method of producing a flexible film of the present invention includes the step of forming a linear groove in the resin layer of the laminate from its outer surface side. The flexible film is obtained by cutting the laminate having formed therein the groove along the groove in a subsequent step. The lengths and number of the grooves can be set to any appropriate lengths and number depending on a desired shape of the flexible film. The groove preferably extends from one end portion to the other end portion in the surface of the resin layer. In addition, when the laminate has the resin layers on both surfaces of the thin glass, the grooves can be formed in both surfaces of the laminate.

A method of forming the groove is, for example, a method involving using a cutting tool or a method involving using laser light. A cutting tool having any appropriate shape can be used as the cutting tool, and for example, a disc-like round cutting tool or a flat cutting tool whose cutting edge is linear can be used.

The laser light preferably includes light having a wavelength of 400 nm or less or of 1.5 µm or more, more preferably includes light having a wavelength of 360 nm or less or of 5 µm or more, still more preferably includes light having a wavelength of 360 nm or less or of 8 µm or more, and particularly preferably includes light having a wavelength of 360 nm or less or of from 8 µm to 12 µm.

Any appropriate laser light can be adopted as the laser light. Examples of the laser light include an excimer laser, a CO₂ laser, a YAG laser, and a UV laser.

Any appropriate conditions can be adopted as conditions for irradiation with the laser light (an output condition, a moving speed, and the number of times) depending on, for example, the kind of the resin constituting the resin layer and the depth of the groove. When the UV laser is used, the output condition is typically from 1 W to 10 W, preferably from 3 W to 7 W, more preferably from 3 W to 5 W. When the UV laser is used, the moving speed is typically from 1 mm/sec to 500 mm/sec, preferably from 100 mm/sec to 400 mm/sec. The number of times is typically from 2 to 10.

The step of forming the groove in the resin layer may be performed after the lamination of the thin glass and the resin layer, or may be performed before the lamination of the thin glass and the resin layer. A method of performing the step before the lamination of the thin glass and the resin layer is specifically, for example, a method involving: forming the groove in the resin film forming the resin layer; and laminating the resin film having formed therein the groove on the thin glass. It should be noted that when the resin layers are formed on both surfaces of the thin glass and then grooves are formed by using laser light, the grooves can be simultaneously formed in the front and rear surfaces of the laminate.

FIG. **2(a)** is a schematic sectional view for illustrating the groove formed in the resin layer according to one embodiment of the present invention. It is preferred that no groove be formed in the thin glass as illustrated in FIG. **2(a)****.** That is, when the laminate does not include the adhesion layer, the depth of the groove is preferably equal to or smaller than the thickness of the resin layer. In addition, when the laminate includes the adhesion layer, the depth of the groove is preferably equal to or smaller than the total thickness of the resin layer and the adhesion layer, and is more preferably equal to or smaller than the total thickness of the resin layer and the adhesion layer, and larger than the thickness of the resin layer. When no groove is formed in the thin glass, the laminate can be cut so as to have a smooth cut surface and a crack occurring in the thin glass can be prevented. In addition, when the groove is formed by using laser light, an irradiation condition suitable for the resin layer can be set because only the resin layer is an object of irradiation with the laser light. As a result, the burning of the resin layer can be suppressed and hence a smooth cut surface can be obtained. Further, when the groove reaches the adhesion layer, the laminate can be easily cut, and hence the flexible film can be obtained with good workability and stability.

When the laminate does not include the adhesion layer, the depth of the groove is preferably from 70% to 100%, more preferably from 80% to 100%, still more preferably from 90% to 100% of the thickness of the resin layer. When the laminate includes the adhesion layer, the depth of the groove is preferably from 80% to 100%, more preferably from 85% to 95%, still more preferably from 90% to 92% of the total thickness of the resin layer and the adhesion layer.

A width **a** of the groove on the outer surface of the resin layer is preferably from 0.01 mm to 5 mm, more preferably from 0.5 mm to 2 mm. When the width falls within such range, a cutting direction does not wind in the surface of the laminate and hence the laminate can be stably cut.

When grooves are formed from both surfaces of the laminate, a shift **b** between center lines **B, B'** extending in the depth directions of the grooves forming a pair is preferably 2.5 mm or less, more preferably 1 mm or less, still more preferably 0.25 mm or less, particularly preferably 0 mm.

The sectional-view shape of the groove may be a triangle as illustrated in FIG. **2(a)**, may be a rectangle as illustrated in FIG. **2(b)**, or may be a trapezoid as illustrated in FIG. **2(c)**. The shape is preferably a triangle or a rectangle, more preferably a triangle.

After the groove has been formed from the outer surface side of the resin layer as described above, the laminate is cut along the groove to provide a fragmented laminate (flexible film). More specifically, for example, the laminate is cut by bending the laminate through the use of a portion having formed therein the groove as a convex point. The laminate may be cut after a fine notch (having a length of, for example, about 3 mm) has been formed only in an end portion of the thin glass. With such procedure, the notch can lead to facilitate the cutting of the laminate.

### Examples

Now, the present invention is described specifically by way of Examples. However, the present invention is by no means limited to these Examples. It should be noted that a thickness was measured using a digital micrometer "KC-351C" manufactured by Anritsu Corporation. The widths of, and a shift between, grooves were measured by observation with a microscope (manufactured by Olympus Corporation, trade name: "MX61L"). The depths of the grooves were measured by cutting a portion having formed therein the grooves and observing the resultant cut surface with a SEM (manufactured by Hitachi, Ltd., trade name: "S-3000N").

### [Example 1]

An adhesive (mixed liquid of 100 parts by weight of an epoxy resin-based adhesive available under the trade name: "CELLOXIDE 2021P" from Daicel Chemical Industries, Ltd., 10 parts by weight of a product available under the trade name: "OXT221" from Toagosei Co., Ltd., 3 parts by weight of a product available under the trade name: "SP-170" from ADEKA Corporation, and 100 parts by weight of methyl ethyl ketone) was applied to a PET film (manufactured by Toray Industries, Inc., trade name: "LUMIRROR T60", thickness: 25 µm) and dried to form an adhesion layer (thickness: 5 µm). A PET (resin layer) /adhesion layer film was bonded to each of both surfaces of a thin glass (thickness: 30 µm), both surfaces of which had been subjected to a coupling treatment with a coupling agent (manufactured by Shin-Etsu Chemical Co., Ltd., trade name: "KBM-403"), and the adhesion layer was cured with UV light (1,000 mJ/cm² or more).

Grooves were formed in the resin layers on both surfaces of a laminate thus obtained with NT Cutter (trademark). The width of each of the grooves was 1 mm or less, and a shift between center lines extending in the depth directions of the grooves in both surfaces was 0.5 mm or less. The depth of each of the grooves was set to 25 µm and the grooves reached the adhesion layers.

After that, the laminate was cut along the grooves to provide a flexible film. The cut surface of the flexible film was smooth and no crack occurred in the thin glass.

### [Example 2]

A flexible film was obtained in the same manner as in Example 1 except that a thin glass having a thickness of 50 µm was used instead of the thin glass having a thickness of 30 µm. The cut surface of the flexible film was smooth and no crack occurred in the thin glass.

### [Example 3]

A flexible film was obtained in the same manner as in Example 1 except that a thin glass having a thickness of 100 µm was used instead of the thin glass having a thickness of 30 µm. The cut surface of the flexible film was smooth and no crack occurred in the thin glass.

### [Example 4]

### (Preparation of Resin Solution)

In a reaction vessel equipped with a stirring device, 7.65 parts by weight of 4,4'-(1,3-dimethylbutylidene)bisphenol, 12.35 parts by weight of 4,4'-(1-phenylethylidene)bisphenol, 0.444 part by weight of benzyltriethylammonium chloride, and 0.022 part by weight of p-tert-butylphenol were dissolved in 185 parts by weight of a 1 M sodium hydroxide solution. To the solution was added in one portion with stirring a solution obtained by dissolving 14.4 parts by weight of terephthalic acid chloride in 246 parts by weight of chloroform, and the mixture was stirred at room temperature for 120 minutes. After that, the polymerization solution was subjected to settled separation to separate a chloroform solution containing a polymer. Next, the chloroform solution was washed with aqueous acetic acid, washed with ion-exchanged water, and then charged into methanol to precipitate the polymer. The precipitated polymer was filtered and dried under reduced pressure to afford a white polymer. 10 parts by weight of the resultant polymer was dissolved in 90 parts by weight of cyclopentanone to prepare a 10 wt% resin solution a

### (Preparation of Adhesive)

10 parts by weight of polyethersulfone having a terminal modified with a hydroxy group (manufactured by Sumitomo Chemical Co., Ltd., trade name: "SUMIKAEXCEL 5003P") was dissolved with heating in 90 parts by weight of cyclopentanone to afford a 10 wt% solution. To the resultant solution were added 0.6 part by weight of 3-ethyl-3{[(3-ethyloxetan-3-yl)methoxy]methyl}oxetane (manufactured by Toagosei Co., Ltd., trade name: "ARON OXETANE OXT-221"), 0.4 part by weight of 1,2-dimethylimidazole, and 2.5 parts by weight of an epoxy-terminated coupling agent (manufactured by Shin-Etsu Chemical Co., Ltd., trade name: "KBM403") to afford an adhesive b.

### (Thin Glass)

One surface of a thin glass (50 µm thick) was washed with methyl ethyl ketone and then subjected to a corona treatment. A 2% aqueous solution of an epoxy coupling agent (manufactured by Shin-Etsu Chemical Co., Ltd., trade name: "KBM403") was applied onto the one surface of the thin glass and dried at 100°C for 10 minutes. The same treatments were carried out for the other surface of the thin glass as well.

### (Production of Laminate)

After that, the resin solution a was applied onto a PET (manufactured by Toray Industries, Inc., trade name: "Lumirror", 75 µm thick) base material having solvent permeability, and the solvent was volatilized at 90°C for 8 minutes to form an applied layer.

The thin glass and the applied layer were attached to each other while supplying the adhesive b between the thin glass which had been subjected to the treatment as described above and the applied layer formed on the PET base material. Such operation was carried out for both surfaces of the thin glass to afford a laminate (PET base material/applied layer/adhesive/thin glass/adhesive/applied layer/PET base material).

The resultant laminate was subjected to a heat treatment at 90°C for 4 minutes, at 130°C for 4 minutes, and at 150°C for 4 minutes.

After that, the PET base materials on both surfaces were peeled off, and the resultant was further subjected to a heat treatment at 150°C for 12 minutes to afford a laminate (resin layer (30 µm) / adhesion layer (2.5 µm)/thin glass (50 µm) /adhesion layer (2.5 µm)/resin layer (30 µm)) having a total thickness of 115 µm.

### (Cutting of Laminate)

Grooves were formed in the resin layers on both surfaces of the laminate thus obtained with NT Cutter (trademark). The width of each of the grooves was 1 mm or less, and a shift between center lines extending in the depth directions of the grooves in both surfaces was 0.5 mm or less. The depth of each of the grooves was set to 30 µm and the grooves reached the adhesion layers.

After that, the laminate was cut along the grooves to provide a flexible film. The cut surface of the flexible film was smooth and no crack occurred in the thin glass.

### [Example 5]

A laminate was produced in the same manner as in Example 4.

Grooves were formed in the resin layers on both surfaces of the resultant laminate by irradiation with laser light (wavelength: 355 nm) from a UV laser (manufactured by Coherent, trade name: "Talisker"). Conditions for the irradiation with the laser light were set as follows: an output of 4 W, a frequency of 200 kHz, a moving speed of 200 mm/sec, and a number of times of irradiation of 5 reciprocations. The width of each of the grooves was 1 mm or less, and a shift between center lines extending in the depth directions of the grooves in both surfaces was 0 mm. The depth of each of the grooves was set to 32.5 µm and the grooves reached the surfaces of the glass layer.

After that, the laminate was cut along the grooves to provide a flexible film. The cut surface of the flexible film was smooth and no crack occurred in the thin glass.

### [Example 6]

A flexible film was obtained in the same manner as in Example 1 except that the PET (resin layer) /adhesion layer film was laminated on one surface of the thin glass. The cut surface of the flexible film was smooth and no crack occurred in the thin glass.

It should be noted that the width of a groove was 1 mm or less. The depth of the groove was set to 25 µm and the groove reached the adhesion layer.

After that, the laminate was cut along the grooves to provide a flexible film. The cut surface of the flexible film was smooth and no crack occurred in the thin glass.

### [Comparative Example 1]

A laminate was obtained in the same manner as in Example 1 except that a thin glass having a thickness of 50 µm was used instead of the thin glass having a thickness of 30 µm.

No groove was formed in the resultant laminate and the laminate was completely divided with a pair of scissors to provide a flexible film.

A crack having a length of about 1 mm occurred in the thin glass near the divided surface of the resultant flexible film.

### [Comparative Example 2]

A laminate was obtained in the same manner as in Example 4.

No groove was formed in the resultant laminate and the laminate was completely divided by irradiation with laser light (wavelength: 10,600 nm) from a CO₂ laser (manufactured by COMNET Corporation) to provide a flexible film. Conditions for the irradiation with the laser light were set as follows: an output of 30 W, a moving speed of 200 mm/sec, and a number of times of irradiation of 10 reciprocations.

The resin layers burned in the divided surface of the resultant flexible film and hence a smooth divided surface was not formed.

### [Comparative Example 3]

A laminate was obtained in the same manner as in Example 1 except that a thin glass having a thickness of 200 µm was used instead of the thin glass having a thickness of 30 µm.

Grooves were formed in the resin layers on both surfaces of the resultant laminate with NT Cutter (trademark). The width of each of the grooves was 1 mm or less, and a shift between center lines extending in the depth directions of the grooves in both surfaces was 1 mm. The depth of each of the grooves was set to 25 µm and the grooves reached the adhesion layers.

After that, the laminate was cut but could not be cut along the grooves, and a crack occurred in the thin glass.

As is apparent from Examples 1 to 6, according to the present invention, a laminate can be cut while a smooth cut surface is secured and the breakage such as crack of a thin glass is suppressed.

### Industrial Applicability

The laminate obtained by the production method of the present invention may be used in a display element, a solar cell, or an illumination element. Examples of the display element include a liquid crystal display, a plasma display, an organic EL display, and electronic paper. The illumination element is, for example, an organic EL element.

### Reference Signs List

**10** thin glass
**11, 11'** resin layer
**12, 12'** adhesion layer
**100, 101** laminate

## Claims

1. A method of producing a flexible film, which includes cutting a laminate including a thin glass having a thickness of 100 µm or less and a resin layer arranged on one side, or each of both sides, of the thin glass,
the method comprising the steps of:
forming a groove from an outer surface side of the resin layer; and
cutting the laminate along the groove.

2. The method of producing a flexible film according to claim 1, wherein the step of forming a groove is performed for the laminate except the thin glass.

3. The method of producing a flexible film according to claim 1 or 2, wherein a width of the groove on an outer surface of the resin layer is from 0.01 mm to 5 mm.

4. The method of producing a flexible film according to any one of claims 1 to 3, wherein the step of forming a groove comprises cutting a groove by using a cutting tool or laser light.

5. The method of producing a flexible film according to any one of claims 1 to 4, wherein in the laminate, a ratio of a total thickness of the resin layer to the thickness of the thin glass is from 0.3 to 4.
